# EUROPEAN PATENT APPLICATION

(11) **EP 4 455 363 A1**
(43) Date of publication of application: **30.10.2024**
(21) Application number: 22911905.2
(22) Date of filing: 21.12.2022
(51) Int. Cl.: C23C 22/08, C23C 22/20

(54) **INSULATION COATING COMPOSITION FOR ELECTRICAL STEEL SHEET, ELECTRICAL STEEL SHEET, AND METHOD FOR MANUFACTURING SAME**

(30) Priority: 22.12.2021 KR 20210185155
(71) Applicant: POSCO Co., Ltd, Pohang-si, Gyeongsangbuk-do 37859 (KR)
(72) Inventor: KIM, Jungwoo, Pohang-si, Gyeongsangbuk-do 37859 (KR); HA, Bongwoo, Pohang-si, Gyeongsangbuk-do 37859 (KR); LEE, Donggyu, Pohang-si, Gyeongsangbuk-do 37859 (KR); NO, Taeyoung, Pohang-si, Gyeongsangbuk-do 37859 (KR)
(74) Representative: Meissner Bolte Partnerschaft mbB
(86) International application number: PCT/KR2022/020911
(87) International publication number: WO 2023/121272

(57) **Abstract**

An insulation coating composition for an electrical steel sheet according to an exemplary embodiment of the present disclosure contains, with respect to 100 parts by weight of a solid content, 30 to 60 parts by weight of an organic/inorganic composite in which inorganic nanoparticles are substituted in a resin, 15 to 45 parts by weight of a metal phosphate, 10 to 40 parts by weight of kaolin, 1 to 10 parts by weight of an inorganic dispersant, and 0.1 to 5 parts by weight of a carbon structure.

## Description

### [Technical Field]

An exemplary embodiment of the present disclosure relates to an insulation coating composition for an electrical steel sheet, an electrical steel sheet, and a method for manufacturing the same. More particularly, an exemplary embodiment of the present disclosure relates to an insulation coating composition for an electrical steel sheet that improves insulation properties, high temperature heat resistance, corrosion resistance, adhesion, and recoatability by a client by controlling components and content ratios in the insulation coating composition for an electrical steel sheet, an electrical steel sheet, and a method for manufacturing the same.

### [Background Art]

An electrical steel sheet is a product used as a material for a transformer, a motor, and an electric machine, and unlike a general carbon steel that places importance on processability such as mechanical properties, the electrical steel sheet is a functional product that places importance on electrical properties. Required electrical properties include a low iron loss, a high magnetic flux density, a high magnetic permeability, and a high space factor.

The electrical steel sheet is classified into a grain-oriented electrical steel sheet and a non-oriented electrical steel sheet. The grain-oriented electrical steel sheet is an electrical steel sheet having excellent magnetic properties in a rolling direction by forming a Goss texture ({110}<001 > texture) on the entire steel sheet by using an abnormal grain growth phenomenon called secondary recrystallization. The non-oriented electrical steel sheet is an electrical steel sheet of which magnetic properties are uniform in all directions on a rolled sheet.

The non-oriented electrical steel sheet is a steel sheet of which magnetic properties are uniform in all directions on a rolled sheet, and is widely used for a motor, an iron core of a generator, an electric motor, a small transformer, and the like. In particular, the non-oriented electrical steel sheet is becoming more advanced to achieve a low iron loss (a refrigerator, a factory motor, and the like) for a reduction in electricity loss, a high magnetic flux density for miniaturization/high efficiency (a vacuum cleaner motor and the like), ultrathinning in response to an increase in frequency for high output (OA equipment and an electric vehicle drive motor), and the like.

In such an advanced non-oriented electrical steel sheet, a thick insulation coating (thick coating) is essential for high insulation properties in terms of efficient energy use. For example, a non-oriented electrical steel sheet used for a medium or large electric motor, generator, or transformer needs to include an insulation coating that provides a high level of insulation properties to minimize interlayer current loss when a laminate formed of steel is used in a punched state. Such a high level of insulation properties may also be required even after a heat treatment such as a stress relief annealing (SRA) treatment.

In addition, in the case of a high-grade non-oriented electrical steel sheet, as hardness of a material is increased due to a high content of silicon, deterioration of processability that causes a lot of stress on a slitter and a press during slitting and punching, and as a result, formation of a thick coating is required.

Meanwhile, there are three types of insulation coating solutions for forming an insulation coating for a non-oriented electrical steel sheet: inorganic, organic, and organic-inorganic composite coating solutions, and a method of first applying an inorganic coating solution and then coating an organic coating solution has been also studied.

The inorganic coating solution contains an inorganic substance such as phosphate as a main component and may form a coating having excellent high temperature heat resistance, weldability, and lamination properties. Therefore, the inorganic coating solution has been used for an EI core. However, as damage to the press during punching occurs faster than that of a coating material containing an organic substance due to high hardness of the insulation coating, the inorganic coating solution is an insulation coating solution that is not advantageous for punching processability.

The organic coating solution contains an organic substance as a main component and is therefore excellent in terms of punchability. In addition, the organic coating solution is widely used in a large-sized iron core that requires high interlayer insulation properties because it has excellent adhesion even in a case where a thickness of a layer is large. The weldability of the organic coating does not exhibit excellent properties due to generation of resin decomposition gas during welding.

For this reason, an organic-inorganic composite coating solution that uses both organic and inorganic substances to complement punching processability defects of inorganic substances such as phosphate and chromate by focusing on heat resistance and insulation properties has been developed. The coating formed using such an insulation coating solution simultaneously satisfies the high temperature heat resistance, which is a property of an inorganic substance, and a lubricity effect of an organic substance, and has an excellent surface appearance.

As an insulation coating composition using an organic-inorganic coating solution, an insulation coating composition containing aluminum phosphate, inorganic fine silicate, and an acrylic resin is known. However, since the insulation coating composition uses a metal phosphate, free phosphate present in the phosphate may cause stickyness of the coating and free phosphate precipitation.

### [Disclosure]

### [Technical Problem]

The present disclosure has been made in an effort to provide an insulation coating composition for an electrical steel sheet, an electrical steel sheet, and a method for manufacturing the same. More particularly, the present disclosure has been made in an effort to provide an insulation coating composition for an electrical steel sheet having high functionality such as high insulation properties, high temperature heat resistance, corrosion resistance, adhesion, and recoatability by a client, an electrical steel sheet, and a method for manufacturing the same.

### [Technical Solution]

An exemplary embodiment of the present disclosure provides an insulation coating composition for an electrical steel sheet containing: with respect to 100 parts by weight of a solid content, 30 to 60 parts by weight of an organic/inorganic composite in which inorganic nanoparticles are substituted in a resin; 15 to 45 parts by weight of a metal phosphate; 10 to 40 parts by weight of kaolin; 1 to 10 parts by weight of an inorganic dispersant; and 0.1 to 5 parts by weight of a carbon structure.

The organic/inorganic composite in which the inorganic nanoparticles are substituted in the resin may contain 25 to 45 parts by weight of the resin and 5 to 15 parts by weight of the inorganic nanoparticles.

The resin may include one or more selected from an epoxy-based resin, an ester-based resin, a melamine-based resin, a siloxane-based resin, an acrylic resin, a phenolic resin, a styrene-based resin, a vinyl-based resin, an ethylene-based resin, and a urethane-based resin.

An average particle diameter of the inorganic nanoparticles may be 10 to 50 nm.

The inorganic nanoparticles may include one or more of SiO₂, Al₂O₃, TiO₂, MgO, ZnO, CaO, and ZrO₂.

The metal phosphate may include one or more metals of Al, Mg, Ca, Co, Mn, Zn, Zr, and Fe.

The metal phosphate may include Al phosphate and may include one or more metal phosphates of Mg, Ca, Co, Mn, Zn, Zr, and Fe.

The inorganic dispersant may include one or more of titanium dioxide (TiO₂), barium sulfate (Ba₂SO₄), calcium carbonate (CaCOs), silicon dioxide (SiO₂), and talc (3MgO·4SiO₂·H₂O).

An average particle size of the inorganic dispersant may be 0.05 to 10 µm.

The carbon structure may include one or more of natural graphite, artificial graphite, carbon black, a carbon nanotube, a carbon fiber, and graphene.

Another exemplary embodiment of the present disclosure provides an electrical steel sheet including an electrical steel sheet substrate and an insulation coating located on a surface of the electrical steel sheet substrate, wherein the insulation coating contains 30 to 60 parts by weight of an organic/inorganic composite in which inorganic nanoparticles are substituted in a resin, 15 to 45 parts by weight of a metal phosphate, 10 to 40 parts by weight of kaolin, 1 to 10 parts by weight of an inorganic dispersant, and 0.1 to 5 parts by weight of a carbon structure.

A thickness of the insulation coating may be 1 to 10 µm.

Still another exemplary embodiment of the present disclosure provides a method for manufacturing an electrical steel sheet, the method including: preparing an electrical steel sheet substrate; applying an insulation coating composition to a surface of the electrical steel sheet substrate; and subjecting the electrical steel sheet substrate to which the insulation coating composition is applied to a heat treatment.

### [Advantageous Effects]

According to an exemplary embodiment of the present disclosure, the solution stability is excellent without containing chromium.

In addition, according to an exemplary embodiment of the present disclosure, the high temperature heat resistance, corrosion resistance, adhesion, and recoatability by a client are excellent at the same time.

### [Description of the Drawings]

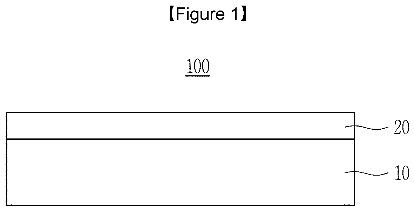

FIG. 1 is a schematic view of a cross section of an electrical steel sheet according to an exemplary embodiment of the present disclosure.

### [Mode for Invention]

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present disclosure.

Terminologies used herein are to mention only a specific exemplary embodiment, and are not to limit the present disclosure. Singular forms used herein include plural forms as long as phrases do not clearly indicate an opposite meaning. The term "comprising" used in the specification concretely indicates specific properties, regions, integers, steps, operations, elements, and/or components, and is not to exclude the presence or addition of other specific properties, regions, integers, steps, operations, elements, and/or components.

When any part is positioned "on" or "above" another part, it means that the part may be directly on or above the other part or another part may be interposed therebetween. In contrast, when any part is positioned "directly on" another part, it means that there is no part interposed therebetween.

Unless defined otherwise, all terms including technical terms and scientific terms used herein have the same meanings as understood by those skilled in the art to which the present disclosure pertains. Terms defined in a generally used dictionary are additionally interpreted as having the meanings matched to the related technical document and the currently disclosed contents, and are not interpreted as ideal or very formal meanings unless otherwise defined.

Hereinafter, exemplary embodiments of the present disclosure will be described in detail with reference to the accompanying drawings so that those skilled in the art to which the present disclosure pertains may easily practice the present disclosure. However, the present disclosure may be implemented in various different forms and is not limited to exemplary embodiments described herein.

An insulation coating composition for an electrical steel sheet according to an exemplary embodiment of the present disclosure contains: with respect to 100 parts by weight of a solid content, 30 to 60 parts by weight of an organic/inorganic composite in which inorganic nanoparticles are substituted in a resin; 15 to 45 parts by weight of a metal phosphate; 10 to 40 parts by weight of kaolin; 1 to 10 parts by weight of an inorganic dispersant; and 0.1 to 5 parts by weight of a carbon structure.

The insulation coating composition for an electrical steel sheet according to an exemplary embodiment of the present disclosure may improve insulation properties, high temperature heat resistance, corrosion resistance, adhesion, and recoatability by a client by controlling components and component ratios in the composition.

Hereinafter, the components of the insulation coating composition for an electrical steel sheet according to an exemplary embodiment of the present disclosure will be described in detail.

The insulation coating composition for an electrical steel sheet according to an exemplary embodiment of the present disclosure contains the organic/inorganic composite in which the inorganic nanoparticles are substituted in the resin in an amount of 30 to 60 parts by weight with respect to 100 parts by weight of the solid content.

The organic/inorganic composite contains a resin and inorganic nanoparticles. Some or all of functional groups of the resin may be substituted with the inorganic nanoparticles, and the resin and the inorganic particles may be present in the composition in a bonded state. When the inorganic nanoparticles are added alone without being bonded to the resin, the inorganic nanoparticles may agglomerate and may not be dispersed.

In the organic/inorganic composite, the resin serves to provide insulation properties to the insulation coating and adhesion between the insulation coating and the steel sheet substrate, and the inorganic nanoparticles prevent precipitation or agglomeration of the metal phosphate and contribute to exhibiting more excellent surface properties after stress relief annealing.

The insulation coating composition contains the organic/inorganic composite in an amount of 30 to 60 parts by weight with respect to 100 parts by weight of the solid content. When the amount of the organic/inorganic composite contained is too small, it is difficult to properly secure the above-described insulation properties, adhesion, and the like. On the other hand, when the amount of the organic/inorganic composite contained is too large, the amount of the metal phosphate added is relatively reduced, which makes it difficult to secure high temperature heat resistance and the like. More specifically, the insulation coating composition contains the organic/inorganic composite in an amount of 35 to 55 parts by weight with respect to 100 parts by weight of the solid content. In an exemplary embodiment of the present disclosure, part(s) by weight indicate(s) a relative ratio between the weights of the components. The solid content refers to the weight of the remaining components excluding volatile components such as a solvent in the insulation coating composition.

The resin refers to a polymer compound and is a concept which contrasts with a monomer. The resin may be contained in an amount of 25 to 45 parts by weight with respect to 100 parts by weight of the solid content of the insulation coating composition for an electrical steel sheet. When the amount of the resin contained is small, it is difficult to properly secure insulation properties, adhesion, and the like. On the other hand, when the amount of the resin contained is too large, it is difficult to properly secure high temperature heat resistance and corrosion resistance. More specifically, the resin may be contained in an amount of 25 to 35 parts by weight.

Specifically, the resin may include one or more selected from an epoxy-based resin, an ester-based resin, a melamine-based resin, a siloxane-based resin, an acrylic resin, a phenolic resin, a styrene-based resin, a vinyl-based resin, an ethylene-based resin, and a urethane-based resin. More specifically, the resin may include one or more of an epoxy-based resin, an ester-based resin, a melamine-based resin, and an acrylic resin. Here, the epoxy-based resin means, for example, that an epoxy group or a group derived from an epoxy group is present in a main chain.

The inorganic nanoparticles prevent precipitation or agglomeration of the insulation coating composition and contribute to exhibiting more excellent properties after stress relief annealing. The inorganic nanoparticles may be contained in an amount of 5 to 15 parts by weight with respect to 100 parts by weight of the solid content of the insulation coating composition for an electrical steel sheet. When the amount of the inorganic nanoparticles contained is small, it is difficult to properly secure dispersibility and high temperature heat resistance. On the other hand, when the amount of the inorganic nanoparticles contained is too large, it is difficult to properly secure adhesion. More specifically, the inorganic nanoparticles may be contained in an amount of 25 to 35 parts by weight.

An average particle diameter of the inorganic nanoparticles may be 10 to 50 nm. The inorganic nanoparticles may include one or more of SiO₂, Al₂O₃, TiO₂, MgO, ZnO, CaO, and ZrO₂. More specifically, the inorganic nanoparticles may include one or more of SiO₂, Al₂O₃, and TiO₂.

The metal phosphate is contained in an amount of 15 to 45 parts by weight with respect to 100 parts by weight of the solid content of the insulation coating composition for an electrical steel sheet.

The metal phosphate used in an exemplary embodiment of the present disclosure is represented by the chemical formula Mₓ(H₂PO₄)_{y} and serves to secure high temperature heat resistance.

The metal phosphate may include one or more metals of Al, Mg, Ca, Co, Mn, Zn, Zr, and Fe. For example, the phosphate including Al may be aluminum phosphate monobasic (Al(H₃PO₄)₃). More specifically, the metal phosphate may include Al phosphate and may include one or more metal phosphates of Mg, Ca, Co, Mn, Zn, Zr, and Fe.

The metal phosphate may be prepared using a reaction of metal hydroxide (Mₓ(OH)_{y}) or metal oxide (MₓO) with phosphoric acid (H₃PO₄).

For example, when each of metal hydroxide (Mₓ(OH)_{y}) or metal oxide (MₓO) is added based on 100 parts by weight of an aqueous phosphoric acid solution containing 85 wt% of free phosphoric acid (H₃PO₄), and a reaction is carried out at 80 to 90°C for 6 to 10 hours, each metal phosphate may be obtained.

The kaolin is contained in an amount of 10 to 40 parts by weight with respect to 100 parts by weight of the solid content of the insulation coating composition for an electrical steel sheet. Kaolin (Al₂Si₂O₅(OH)₄) is also called clay and serves as an extender pigment. The kaolin serves to improve corrosion resistance of the insulation coating. When the amount of the kaolin contained is too small, corrosion resistance may deteriorate. When the amount of the kaolin contained is too large, adhesion of the insulation coating may deteriorate. More specifically, the kaolin may be contained in an amount of 20 to 35 parts by weight.

The inorganic dispersant is contained in an amount of 1 to 10 parts by weight with respect to 100 parts by weight of the solid content of the insulation coating composition for an electrical steel sheet. The inorganic dispersant serves to properly disperse the kaolin described above in the composition. When the kaolin not properly dispersed, it may be difficult to secure corrosion resistance due to kaolin. When the amount of the inorganic dispersant is too small, corrosion resistance may deteriorate. When the amount of the inorganic dispersant is too large, adhesion of the insulation coating may deteriorate.

An average particle size of the kaolin may be 0.2 to 0.8 µm, and kaolin in the form of plate-like crystals may be used.

The inorganic dispersant may include one or more of titanium dioxide (TiO₂), barium sulfate (Ba₂SO₄), calcium carbonate (CaCOs), silicon dioxide (SiO₂), and talc (3MgO·4SiO₂·H₂O). More specifically, the inorganic dispersant may include titanium dioxide (TiO₂).

An average particle size of the inorganic dispersant may be 0.05 to 10 µm. The form of the inorganic dispersant may vary depending on its type. For example, a rod shape may be used for barium sulfate, a spherical shape may be used for titanium dioxide, an amorphous form may be used for calcium carbonate and silicon dioxide, and a plate-like crystal, a bulk shape, and the like may be used for talc. For example, in the case of titanium dioxide, spherical particles having an average particle size of 50 to 100 nm may be used.

The carbon structure is contained in an amount of 0.1 to 5 parts by weight with respect to 100 parts by weight of the solid content of the insulation coating composition for an electrical steel sheet. The carbon structure serves to improve corrosion resistance of the insulating coating and also serves to remove defects such as cracks present in the steel sheet substrate. When the amount of the carbon structure contained is too small, it may be difficult to properly perform the roles described above. When the amount of the carbon structure contained is too large, adhesion and insulation properties of the insulation coating may deteriorate. More specifically, the carbon structure may be contained in an amount of 0.1 to 1 part by weight with respect to 100 parts by weight of the solid content of the insulation coating composition for an electrical steel sheet.

The carbon structure may include one or more of natural graphite, artificial graphite, carbon black, a carbon nanotube, a carbon fiber, and graphene. More specifically, the carbon structure may include carbon black.

In addition to the components described above, the insulation coating composition may contain a solvent to facilitate application and to uniformly disperse the components. The amount of the solvent is not particularly limited, and the solvent may be contained in an amount of 50 parts by weight to 500 parts by weight with respect to 100 parts by weight of the solid content.

FIG. 1 is a schematic view of a cross section of an electrical steel sheet 100 according to an exemplary embodiment of the present disclosure. As illustrated in FIG. 1, the electrical steel sheet 100 according to an exemplary embodiment of the present disclosure includes an electrical steel sheet substrate 10 and an insulation coating 20 located on a surface of the electrical steel sheet substrate 10.

As the electrical steel sheet substrate 10, a general non-oriented or grain-oriented electrical steel sheet may be used without limitation. In an exemplary embodiment of the present disclosure, the main configuration is to form the insulation coating 20 of a special component on the electrical steel sheet substrate 10, and therefore, a detailed description of the electrical steel sheet substrate 10 will be omitted.

A thickness of the insulation coating 20 may be 1 to 10 µm. When the thickness of the insulation coating 20 is too thin, it is difficult to secure appropriate insulation properties. When the thickness of the insulation coating 20 is too thick, a space factor may be reduced. In an exemplary embodiment of the present disclosure, appropriate insulation properties may be secured even when the insulation coating 20 having a thin thickness is formed. More specifically, the thickness of the insulation coating 20 may be 2 to 5 µm.

In the insulation coating 20, the solid content and content ratio in the insulation coating composition described above may be maintained. Specifically, the insulation coating 20 contains, with respect to 100 parts by weight of the entire insulation coating, 30 to 60 parts by weight of an organic/inorganic composite in which inorganic nanoparticles are substituted in a resin, 15 to 45 parts by weight of a metal phosphate, 10 to 40 parts by weight of kaolin, 1 to 10 parts by weight of an inorganic dispersant, and 0.1 to 5 parts by weight of a carbon structure.

In addition, since the configuration of the insulation coating 20 has been described in detail in relation to the insulation coating composition, a redundant description will be omitted.

A method for manufacturing an electrical steel sheet according to an exemplary embodiment of the present disclosure includes preparing an electrical steel sheet substrate; applying an insulation coating composition to a surface of the electrical steel sheet substrate; and subjecting the electrical steel sheet substrate to which the insulation coating composition is applied to a heat treatment.

First, an electrical steel sheet substrate is prepared. As the electrical steel sheet substrate 10, a general non-oriented or grain-oriented electrical steel sheet may be used without limitation. In an exemplary embodiment of the present disclosure, the main configuration is to form the insulation coating 20 of a special component on the electrical steel sheet substrate 10, and therefore, a detailed description of the method for manufacturing the electrical steel sheet substrate 10 will be omitted.

Next, an insulation coating composition is applied to a surface of the electrical steel sheet substrate. Since the insulation coating composition has been described above, a detailed description will be omitted.

Next, the electrical steel sheet substrate to which the insulation coating composition is applied is subjected to a heat treatment. A heat treatment temperature may be 300 to 750°C. When the temperature is too low, it takes a long time to form a coating, which may cause a whitening phenomenon. When the temperature is too high, heat resistance and bluing resistance may deteriorate due to cracking.

Hereinafter, preferred examples of the present disclosure, comparative examples thereof, and evaluation examples thereof will be described. However, each of the following examples is merely a preferred example of the present disclosure, and the present disclosure is not limited to the following examples.

### Examples

A non-oriented electrical steel sheet (150 * 50 mm) containing 3.15 wt% of silicon (Si) in terms of weight ratio and having a thickness of 0.27 mm was used as a test specimen, an insulation coating composition solution listed in Table 1 was applied to the test specimen using a bar coater and a roll coater to form a 6 µm coating on each prepared test specimen, and the test specimen was kept in a drying furnace in a temperature range of about 400°C for 30 seconds and then slowly cooled in air. The insulation coating was evaluated using the following method. The results are summarized in Table 2.

The surface state was evaluated by a degree of surface streaks and defects after coating and curing. The case where no surface streaks and defects were observed at all was marked as excellent (o), the case where almost no surface streaks and defects were observed was marked as good (o), the case where some surface streaks and defects were observed was marked as medium (△), and the case where serious surface streaks and defects were observed was marked as poor (x).

Insulation properties were measured using a Franklin insulation tester, which is a single sheet testing device that measures surface insulation resistance of an electrical steel sheet under a certain pressure and a certain voltage. A current range was 0 to 1.000 Amp, and in the insulation measurement method, one sheet of a measurement test specimen was placed on a plate so that contacts of all electrodes were in contact with each other, and then a pressure was applied to 300 psi (20.4 atm) using a pressurizing device. When the test pressure was reached, a sliding resistor was adjusted, and a scale of an ammeter was read under a voltage of 0.5 V. Five sheets were evaluated for each test solution. The case where the insulation resistance value was 100 Ω·cm²/lamination or more was marked as excellent (o), the case where the insulation resistance value was 60 Ω·cm²/lamination or more was marked as good (o), the case where the insulation resistance value was 40 Ω·cm²/lamination or more was marked as medium (△), and the case where the insulation resistance value was less than 40 Ω·cm²/lamination was marked as poor (x).

The corrosion resistance was evaluated by measuring the presence or absence of rust in the specimen in a 5% NaCl solution at 35°C for 8 hours. The case where the rust area was 2% or less was marked as excellent (o), the case where the rust area was 5% or less was marked as good (o), the case where the rust area was 30% or less was marked as medium (△), and the case where the rust area was 50% or more was marked as poor (x).

The high temperature heat resistance was evaluated through continuous rating (180 + 30°C, 2,500 h) of IEC60404-12, and the degree of change in insulation resistance, adhesion (cylindrical mandrel bending), and space factor before and after high temperature heat resistance evaluation was evaluated. In the results of the degree of change in insulation resistance, adhesion, and space factor after the continuous rating evaluation, the case where the value was less than 5% was marked as excellent (o), the case where the value was less than 10% was marked as good (o), the case where the value was less than 30% was marked as medium (△), and the case where the value was 30% or more was marked as poor (x).

The adhesion is expressed as a minimum arc diameter without coating feeling when the tested specimen is bent 180° in contact with an arc of 5, 10, 20, or 30 to 100 mmϕ. Here, the case were the minimum arc diameter was 5 mmϕ or less was marked as excellent (o), the case were the minimum arc diameter was 10 mmϕ or less was marked as good (o), the case were the minimum arc diameter was 20 mmϕ or less was marked as medium (△), and the case where the minimum arc diameter was more than 20 mmϕ was marked as poor (x).

The recoatability was evaluated by applying and drying the secondary coating solution of Comparative Example 1 on the coating layer of the specimen to which the solution of the example was applied and then evaluating the surface state of the secondary coating layer and the adhesion with the primary coating layer.

The solution stability was measured by checking whether precipitation occurred while the solution was left for a week. The case where precipitation did not occur was marked as good (o), and the case where precipitation occurred was marked as poor (x).

The insulation properties were evaluated by measuring the upper portion of the coating using a Franklin measuring instrument according to ASTM A717 international standard.

The carbon aggregate was analyzed through a TEM image and a carbon EDS mapping image of the cross section perpendicular to the rolling direction, and it was determined that the aggregate of one or more particles of 10 to 500 nm was a carbon aggregate and the empty space was a pore.

**[Table 1]**

| | Organic/inorganic composite | | | | Metal phosphate | | Kaolin | Inorganic dispersant | | Carbon structure | |
|---|---|---|---|---|---|---|---|---|---|---|---|
| | Resin | | Inorganic nanoparticles | | | | | | | | |
| | Type | Content (g) | Type | Content (g) | Type | Content (g) | Content (g) | Type | Content (g) | Type | Content (g) |
| Example 1 | Ester | 29 | SiO₂ | 6 | Al phosphate/ Zn phosphate | 30 | 30 | TiO₂ | 40 | Carbon black | 10 |
| Example 2 | Ester | 29 | SiO₂ | 6 | Al phosphate/ Mg phosphate | 40 | 20 | TiO₂ | 3.5 | Carbon black | 15 |
| Example 3 | Ester | 29 | SiO₂ | 6 | Al phosphate/ Co phosphate | 20 | 40 | TiO₂ | 4.5 | Carbon black | 0.5 |
| Example 4 | Epoxy | 33.5 | SiO₂ | 6 | Al phosphate/ Mn phosphate | 25 | 30 | TiO₂ | 3.5 | Carbon black | 20 |
| Example 5 | Epoxy | 34 | SiO₂ | 6 | Al phosphate/ Ca phosphate | 35 | 20 | TiO₂ | 4.5 | Carbon black | 0.5 |
| Example 6 | Epoxy | 34 | SiO₂ | 6 | Al phosphate/ Zn phosphate | 15 | 35 | TiO₂ | 9.5 | Carbon black | 0.5 |
| Example 7 | Melamine | 26 | SiO₂ | 4 | Al phosphate/ Mg phosphate | 30 | 35 | TiO₂ | 4.5 | Carbon black | 0.5 |
| Example 8 | Melamine | 26 | SiO₂ | 4 | Al phosphate | 40 | 25 | TiO₂ | 2.5 | Carbon black | 2.5 |
| Example 9 | Acryl | 34 | SiO₂ | 6 | Al phosphate | 25 | 27 | TiO₂ | 7.0 | Carbon black | 10 |
| Example 10 | Acryl | 34 | SiO₂ | 6 | Al phosphate | 35 | 20 | TiO₂ | 4.5 | Carbon black | 0.5 |
| Comparative Example 1 | Melamine | 50 | - | - | - | - | - | Barium sulfate | 50 | - | - |
| Comparative Example 2 | Melamine | 50 | SiO₂ | 20 | - | - | - | Calcium carbonate | 30 | - | - |
| Comparative Example 3 | Epoxy | 40 | - | - | Al phosphate | 60 | - | - | - | - | - |
| Comparative Example 4 | Acryl | 40 | - | - | Mg phosphate | 60 | - | - | - | - | - |
| Comparative Example 5 | Ester | 50 | SiO₂ | 10 | Al phosphate | 35 | 1.0 | TiO₂ | 3.5 | Carbon black | 0.5 |
| Comparative Example 6 | Ester | 25 | SiO₂ | 5 | Zn phosphate | 5 | 60 | TiO₂ | 3 | Carbon black | 2.0 |
| Comparative Example 7 | Epoxy | 30 | SiO₂ | a | Mg phosphate | 30 | 30 | - | - | Carbon black | 4.0 |
| Comparative Example 8 | Epoxy | 35 | SiO₂ | 5 | Al phosphate | 20 | 10 | TiO₂ | 28 | Carbon black | 2 |
| Comparative Example 9 | Epoxy | 25 | SiO₂ | 5 | Al phosphate | 25 | 40 | TiO₂ | 5 | - | - |
| Comparative Example 10 | Melamine | 20 | SiO₂ | 5 | Mn phosphate | 25 | 30 | TiO₂ | 10 | Carbon black | 10 |
| SiO₂ average particle diameter 30 nm | | | | | | | | | | | |
| TiO₂ average particle diameter 70 nm | | | | | | | | | | | |

**[Table 2]**

| | Surface state | Insulation properties | Corrosion resistance | High temperature heat resistance | Adhesion | Recoatability |
|---|---|---|---|---|---|---|
| Example 1 | ⊙ | ⊙ | ○ | ○ | ○ | ○ |
| Example 2 | ○ | ○ | ○ | ⊙ | ⊙ | ○ |
| Example 3 | ○ | ○ | ⊙ | ○ | ○ | ○ |
| Example 4 | ○ | ○ | ○ | ○ | ○ | ○ |
| Example 5 | ○ | ○ | ○ | ○ | ⊙ | ⊙ |
| Example 6 | ○ | ○ | ○ | ○ | ○ | ○ |
| Example 7 | ⊙ | ⊙ | ○ | ○ | ⊙ | ○ |
| Example 8 | ○ | ○ | ○ | ○ | ○ | ○ |
| Example 9 | ○ | ○ | ⊙ | Δ | ⊙ | ○ |
| Example 10 | ○ | ⊙ | ○ | ○ | ⊙ | ⊙ |
| Comparative Example 1 | Δ | ○ | Δ | X | Δ | ○ |
| Comparative Example 2 | Δ | ○ | Δ | X | Δ | ⊙ |
| Comparative Example 3 | ○ | Δ | ○ | Δ | ⊙ | Δ |
| Comparative Example 4 | ○ | X | ○ | Δ | ⊙ | X |
| Comparative Example 5 | X | Δ | ○ | Δ | Δ | Δ |
| Comparative Example 6 | X | Δ | ○ | Δ | ⊙ | Δ |
| Comparative Example 7 | ○ | Δ | ○ | Δ | ⊙ | Δ |
| Comparative Example 8 | X | Δ | X | Δ | ⊙ | Δ |
| Comparative Example 9 | ○ | Δ | ○ | Δ | ⊙ | Δ |
| Comparative Example 10 | X | Δ | X | Δ | ⊙ | Δ |

As shown in Table 1, in Examples in which the organic/inorganic composite, metal phosphate, kaolin, inorganic dispersant, and carbon structure were appropriately included, it could be confirmed that the surface state, insulation properties, corrosion resistance, high temperature heat resistance, adhesion, and recoatability were excellent at the same time. On the other hand, in Comparative Examples in which the kaolin, inorganic dispersant, and carbon structure were not appropriately included, it could be confirmed that one or more of the surface state, insulation properties, corrosion resistance, high temperature heat resistance, adhesion, and recoatability were poor.

The present disclosure is not limited to the exemplary embodiments, but may be prepared in various different forms, and it will be apparent to those skilled in the art to which the present disclosure pertains that the exemplary embodiments may be implemented in other specific forms without departing from the spirit or essential feature of the present disclosure. Therefore, it is to be understood that the exemplary embodiments described hereinabove are illustrative rather than restrictive in all aspects.

### [Description of symbols]

| | | | |
|---|---|---|---|
| 100: | Electrical steel sheet | 10: | Electrical steel sheet substrate |
| 20: | Insulation coating | | |

## Claims

1. An insulation coating composition for an electrical steel sheet, comprising:
with respect to 100 parts by weight of a solid content,
30 to 60 parts by weight of an organic/inorganic composite in which inorganic nanoparticles are substituted in a resin;
15 to 45 parts by weight of a metal phosphate;
10 to 40 parts by weight of kaolin;
1 to 10 parts by weight of an inorganic dispersant; and
0.1 to 5 parts by weight of a carbon structure.

2. The insulation coating composition of claim 1, wherein:
the organic/inorganic composite in which the inorganic nanoparticles are substituted in the resin contains 25 to 45 parts by weight of the resin and 5 to 15 parts by weight of the inorganic nanoparticles.

3. The insulation coating composition of claim 1, wherein:
the resin includes one or more selected from an epoxy-based resin, an ester-based resin, a melamine-based resin, a siloxane-based resin, an acrylic resin, a phenolic resin, a styrene-based resin, a vinyl-based resin, an ethylene-based resin, and a urethane-based resin.

4. The insulation coating composition of claim 1, wherein:
an average particle diameter of the inorganic nanoparticles is 10 to 50 nm.

5. The insulation coating composition of claim 1, wherein:
the inorganic nanoparticles include one or more of SiO₂, Al₂O₃, TiO₂, MgO, ZnO, CaO, and ZrO₂.

6. The insulation coating composition of claim 1, wherein:
the metal phosphate includes one or more metals of Al, Mg, Ca, Co, Mn, Zn, Zr, and Fe.

7. The insulation coating composition of claim 1, wherein:
the metal phosphate includes Al phosphate and includes one or more metal phosphates of Mg, Ca, Co, Mn, Zn, Zr, and Fe.

8. The insulation coating composition of claim 1, wherein:
the inorganic dispersant includes one or more of titanium dioxide (TiO₂), barium sulfate (Ba₂SO₄), calcium carbonate (CaCOs), silicon dioxide (SiO₂), and talc (3MgO·4SiO₂.H₂O).

9. The insulation coating composition of claim 1, wherein:
an average particle size of the inorganic dispersant is 0.05 to 10 µm.

10. The insulation coating composition of claim 1, wherein:
the carbon structure includes one or more of natural graphite, artificial graphite, carbon black, a carbon nanotube, a carbon fiber, and graphene.

11. An electrical steel sheet comprising:
an electrical steel sheet substrate; and
an insulation coating located on a surface of the electrical steel sheet substrate,
wherein the insulation coating contains 30 to 60 parts by weight of an organic/inorganic composite in which inorganic nanoparticles are substituted in a resin, 15 to 45 parts by weight of a metal phosphate, 10 to 40 parts by weight of kaolin, 1 to 10 parts by weight of an inorganic dispersant, and 0.1 to 5 parts by weight of a carbon structure.

12. The electrical steel sheet of claim 11, wherein:
a thickness of the insulation coating is 1 to 10 µm.

13. A method for manufacturing an electrical steel sheet, the method comprising:
preparing an electrical steel sheet substrate;
applying the insulation coating composition of any one of claims 1 to 10 to a surface of the electrical steel sheet substrate; and
subjecting the electrical steel sheet substrate to which the insulation coating composition is applied to a heat treatment.
